# FASCICULE DE BREVET EUROPEEN

(11) **EP 4 605 640 B1**
(45) Date de publication et mention de la délivrance du brevet: **02.12.2026**
(21) Numéro de dépôt: 23793445.0
(22) Date de dépôt: 09.10.2023
(51) Int. Cl.: F02C 7/08

(54) **TURBOMACHINE A CYCLE RECUPERE EQUIPÉE D'UN ECHANGEUR DE CHALEUR**
TURBOMASCHINE MIT EINEM WÄRMETAUSCHER AUSGESTATTETEM REKUPERATIONSZYKLUS
TURBOMACHINE WITH RECUPERATION CYCLE EQUIPPED WITH A HEAT EXCHANGER

(30) Priorité: 18.10.2022 FR 2210766
(43) Date de publication de la demande: 27.08.2025
(60) Demande divisionnaire: 26210287.4 / 4 844 212; 26210288.2 / 4 844 213
(73) Titulaire: Safran Helicopter Engines, 64510 Bordes (FR)
(72) Inventeur: BREINING, Jean-Luc, 77550 MOISSY-CRAMAYEL (FR); JOUSSELIN, Samuel Christian, 77550 MOISSY-CRAMAYEL (FR); VIVE, Loïs Pierre Denis, 77550 MOISSY-CRAMAYEL (FR); TARNOWSKI, Laurent Pierre, 77550 MOISSY-CRAMAYEL (FR); PONS, Bernard Claude, 77550 MOISSY-CRAMAYEL (FR)
(74) Mandataire: Gevers & Orès
(86) Numéro de dépôt international: PCT/FR2023/051567
(87) Numéro de publication internationale: WO 2024/084150

(56) Documents cités:
- EP-A2- 1 589 204
- FR-A- 1 452 128
- FR-A1- 3 036 437
- GB-A- 1 084 889
- US-A- 3 339 364

## Description

### Domaine technique

La présente invention concerne le domaine des turbomachines d'aéronef à cycle récupéré, en particuliers comportant un échangeur de chaleur.

### Arrière-plan technique

L'état de la technique comprend notamment les documents EP-A2-1589204, GB-A-1084889, FR-A1-3036437, US-A-3339364 et FR-A-1452128.

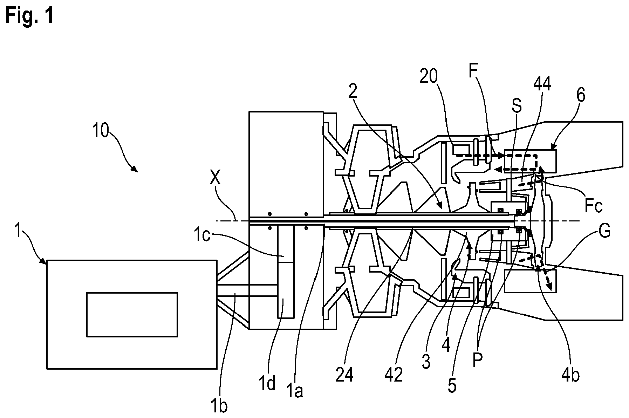

Telle qu'illustrée sur la figure 1, une turbomachine 10 d'aéronef comprend un générateur de gaz comportant d'amont en aval, dans le sens d'écoulement des gaz, au moins un compresseur 2, une chambre annulaire de combustion 3, et au moins une turbine 4. Le compresseur 2 est alimenté en air et le comprime. L'air comprimé est mélangé à du carburant et brûlé dans la chambre de combustion 3 qui fournit des gaz de combustion à la turbine 4. Ces gaz de combustion se détendent dans la turbine 4 et entraînent en rotation son rotor 42, qui entraîne à son tour, par l'intermédiaire d'un arbre commun, le rotor du compresseur 2.

La turbomachine 10 peut être équipée d'un ou plusieurs corps comportant chacun un rotor de compresseur 2 relié par un arbre à un rotor de turbine 4. Il existe également des turbomachines où une turbine libre 4b est montée en aval du ou des corps de la turbomachine. Une turbine est libre dans la mesure où son rotor n'est pas relié par un arbre à un rotor de compresseur. On comprend ainsi qu'une turbomachine peut comprendre plusieurs compresseurs successifs (par exemple un compresseur basse pression suivi d'un compresseur haute pression), ainsi que plusieurs turbines successives (par exemple une turbine haute pression suivie d'une turbine libre ou d'une turbine basse pression).

Une turbomachine peut être un turbomoteur (tel que des moteurs d'hélicoptère, unités de puissance auxiliaires ou APU) et un turbopropulseur (tel que des avions et drones).

Dans la présente demande, on entend par une turbomachine à cycle classique, une turbomachine dont l'air comprimé sortant du ou des compresseurs alimentent directement la chambre de combustion.

A contrario, on entend par une turbomachine à cycle récupéré (telle qu'illustrée sur la figure 1), une turbomachine dans laquelle les gaz de combustion G s'écoulant en sortie de la ou des turbines 4, 4b sont utilisés pour réchauffer l'air comprimé F sortant du ou des compresseurs 2. L'air réchauffé Fc par les gaz G est destiné à alimenter la chambre de combustion 3. Cette technologie permet d'améliorer les performances de la turbomachine car la quantité de carburant nécessaire pour atteindre la température de fonctionnement de la turbomachine est inférieure à celle nécessaire dans le cadre d'une turbomachine à cycle classique.

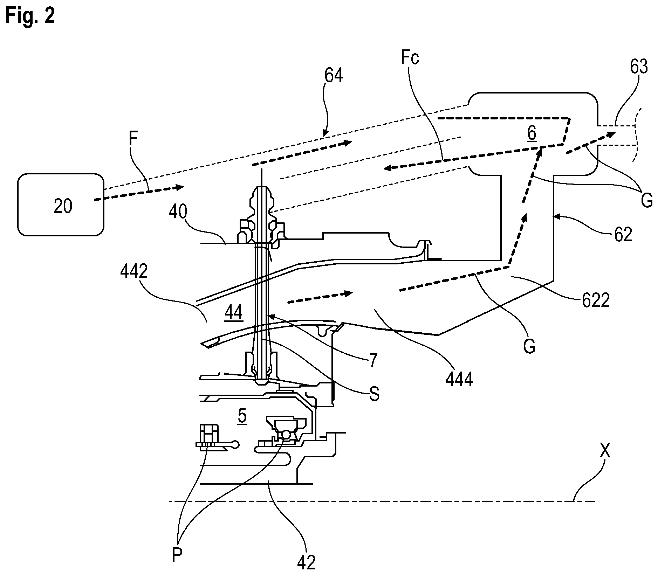

Il est ainsi avantageux d'intégrer, dans les éléments de structure de la turbine 4b, un échangeur de chaleur 6 pour récupérer l'énergie résiduelle en sortie de la turbine 4 et réchauffer l'air F comprimé à l'amont de la chambre de combustion 3. Pour cela, en référence à la figure 2, l'échangeur 6 s'étend radialement à l'extérieur d'un carter annulaire 40 de turbine 4. L'échangeur 6 comprend un premier circuit 62 relié à une sortie 444 d'une veine annulaire 44 pour récupérer les gaz G de turbine.

L'échangeur 6 comprend un second circuit 64 relié à un système de prélèvement 20 (fig.1) d'air comprimé F du compresseur 2 et l'air réchauffé Fc par les gaz G dans l'échangeur est transféré à l'amont de la chambre de combustion 3. Au moins une partie des gaz G, au niveau de l'échangeur 6, est relarguée, via une sortie 63, dans l'atmosphère notamment en passant par une tuyère d'échappement de la turbomachine.

Un des inconvénients d'intégrer cet échangeur de chaleur dans la turbomachine, est sa proximité avec d'autres éléments de la turbine, et notamment de servitudes. En effet, la turbine comprend des servitudes S pour le fonctionnement du ou des palier(s) P, dits arrières, de la turbomachine. Ces servitudes traversent la veine annulaire 44 de turbine. L'intégration de l'échangeur 6 dans cette zone n'est pas aisée, car elle est susceptible de perturber les échanges d'air F, Fc entrant et sortant de cet échangeur 6.

Dans ce contexte, il est intéressant de pallier les inconvénients de l'art antérieur, en proposant un agencement des servitudes adapté à la présence de l'échangeur de chaleur dans une turbomachine à cycle récupéré, de façon à limiter les pertes de charge ou d'efficacité des échanges d'air entrant et sortant de cet l'échangeur de chaleur tout en assurant les fonctions de servitudes du ou des palier(s).

### Exposé de l'invention

La présente invention propose une solution simple, efficace et économique à au moins une partie des problèmes précités.

A cet effet, l'invention propose une turbomachine d'aéronef à cycle récupéré, comportant :
- au moins un compresseur centré sur un axe X de la turbomachine,
- une chambre annulaire de combustion s'étendant autour de l'axe X,
- au moins une turbine centrée sur l'axe X, cette turbine définissant une veine annulaire d'écoulement de gaz,
- une enceinte annulaire de paliers de guidage d'au moins un rotor de la turbine, cette enceinte annulaire étant située radialement à l'intérieur de la veine annulaire,
- un échangeur de chaleur situé radialement à l'extérieur de la veine annulaire et comportant deux circuits, un premier circuit de l'échangeur comportant une entrée reliée à une sortie de la veine annulaire, et un second circuit de l'échangeur comportant une entrée d'air reliée à un système de prélèvement d'air comprimé dans le compresseur, et une sortie d'air,
- un carter annulaire de turbine s'étendant autour de la veine de turbine, et
- au moins un conduit de passage de servitudes qui s'étend radialement par rapport à l'axe X depuis le carter de turbine jusqu'à l'enceinte annulaire de palier(s).

Selon l'invention, la turbomachine comprend en outre un dispositif annulaire circulation d'air s'étendant autour de la veine annulaire de turbine et comportant deux canaux annulaires coaxiaux, un premier canal du dispositif comportant une première extrémité amont reliée au système de prélèvement et une première extrémité aval reliée à l'entrée d'air du second circuit de l'échangeur et un second canal du dispositif comportant une seconde extrémité aval reliée à la sortie d'air du second circuit de l'échangeur.

Selon l'invention ledit au moins un conduit s'étend radialement vers l'extérieur jusqu'à ce dispositif annulaire de circulation d'air.

Selon l'invention, ledit au moins un conduit comprend une extrémité radialement externe qui comprend un embout de raccordement, et qui est reliée au dispositif annulaire de circulation d'air.

Ainsi, cette solution permet d'atteindre l'objectif susmentionné. Grâce au dispositif annulaire de circulation d'air, on peut minimiser les pertes de charge ou d'efficacité des échanges d'air du second circuit de l'échangeur tout en conservant la fonction de servitudes de l'enceinte annulaire de palier(s). Par ailleurs, le ou les conduits de passage de servitudes sont intégrés de façon à ne pas perturber l'écoulement d'air au sein des premier et second canaux du dispositif annulaire de circulation d'air.

La nouvelle configuration du ou des conduits de passage de servitudes et du dispositif annulaire de circulation d'air permet donc de faciliter les échanges d'air F, Fc et de gaz G entre l'échangeur et les autres composants de la turbomachine. Pour cela, le dispositif de l'invention est relié au second circuit de l'échangeur dans lequel, d'une part, le premier canal est configuré pour alimenter l'échangeur en air comprimé F prélevé sur le compresseur par le système de prélèvement, et d'autre part, le second canal est configuré pour redistribuer l'air réchauffé Fc par les gaz G (provenant du premier circuit de l'échangeur) en amont du dispositif (notamment en amont de la chambre de combution). Au moins une partie des gaz G du premier circuit de l'échangeur est configurée à sortir de l'échangeur, notamment en dehors de la turbomachine par exemple par une tuyère d'échapement de la turbomachine

L'invention présente par conséquent l'avantage de proposer une conception simple, offrant une grande fiabilité, et peu pénalisante en termes de coûts et d'encombrement dans la turbomachine.

L'invention peut comprendre une ou plusieurs des caractéristiques suivantes, prises isolément les unes des autres ou en comparaison les unes avec les autres :
- ladite extrémité radialement externe est reliée au dispositif annulaire de circulation d'air par une liaison linéaire annulaire ;
- au moins un joint d'étanchéité est logé dans une gorge de l'extrémité radialement externe ;
- ledit au moins un conduit traverse une lumière ou un orifice radial(e) du dispositif annulaire de circulation d'air, cette lumière ou cet orifice s'étendant radialement sur toute l'épaisseur dudit dispositif ;
- les premier et second canaux du dispositif annulaire de circulation d'air divergent vers l'aval et comprennent chacun une section de passage qui augmentent depuis leurs extrémités axiales amont jusqu'à leurs extrémités axiales aval ;
- le dispositif annulaire de circulation d'air comprend trois parois annulaires coaxiales délimitant entre elles lesdits premier et second canaux, chacune de ces parois comprenant une bride de fixation ou un organe d'étanchéité à chacune de ses extrémités axiales ;
- le dispositif annulaire de circulation d'air a un diamètre externe DE₈ à son extrémité amont qui est compris entre des diamètres interne DI₈₄₄ et externe DE₈₂₄ de son extrémité aval, et qui est par exemple compris entre des diamètres D₈₇, D₈₅ des extrémités aval de ses parois de séparation et interne ;
- le carter annulaire de turbine comprend au moins un orifice de passage dudit au moins un conduit ;
- ledit au moins un conduit de passage de servitudes présente une dimension radiale H₇ comprise entre 110 et 170 mm, de préférence la dimension radiale H₇ est comprise entre 150 et 160 mm ;
- ledit au moins un conduit de passage de servitudes présente un diamètre externe DE₇ compris entre 6 et 10 mm et un diamètre interne DI₇ compris entre 4 et 8 mm.

L'invention concerne aussi un aéronef comprenant au moins une turbomachine à cycle récupéré selon l'une des particularités de l'invention.

### Description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
la figure 1 est une vue schématique en coupe axiale d'une turbomachine à cycle récupéré selon l'art antérieur,
la figure 2 est une vue schématique agrandie et partielle en coupe axiale des conduits de passage de servitudes et d'un échangeur de chaleur au sein de la turbomachine de la figure 1,
la figure 3 est une vue schématique en coupe axiale d'une turbomachine à cycle récupéré selon l'invention,
la figure 4 est une vue schématique en coupe axiale d'un conduit de passage de servitudes de la turbomachine de la figure 3,
la figure 5 est une vue schématique en perspective d'un dispositif annulaire de circulation d'air de la turbomachine de la figure 3 selon un premier mode de réalisation,
la figure 6 est une vue schématique agrandie et partielle en coupe axiale de la turbomachine de la figure 3 comportant le conduit de passage de servitudes de la figure 4 agencé avec le dispositif annulaire de circulation d'air de la figure 5,
la figure 7 est une vue schématique en perspective d'un dispositif annulaire de circulation d'air de la turbomachine de la figure 3 selon un second mode de réalisation,
la figure 8 est une vue schématique agrandie et partielle en coupe axiale de la turbomachine de la figure 3 comportant le conduit de passage de servitudes de la figure 4 agencé dans le dispositif annulaire de circulation d'air de la figure 7.

Les éléments ayant les mêmes fonctions dans les différentes mises en œuvre ont les mêmes références dans les figures.

### Description détaillée

Par convention, dans la description ci-après, les termes « longitudinal » et « axial » qualifient l'orientation d'éléments structurels s'étendant selon la direction d'un axe longitudinal, tel qu'un axe longitudinal du moteur d'une turbomachine. Les termes « radial » ou « vertical » qualifient une orientation d'éléments structurels s'étendant selon une direction perpendiculaire à l'axe longitudinal. Les termes « intérieur » et « extérieur », et « interne » et « externe » sont utilisés en référence à un positionnement par rapport à l'axe longitudinal. Ainsi, un élément structurel s'étendant selon l'axe longitudinal comporte une face intérieure tournée vers l'axe longitudinal et une surface extérieure, opposée à sa surface intérieure.

De même, par convention dans la présente demande, les termes « amont » et « aval » sont définis par rapport au sens de circulation des gaz dans la turbomachine.

Les figures 1 et 2 ont été décrites dans ce qui précède et illustrent une turbomachine 10 à cycle récupéré de l'art antérieur, dans laquelle le ou les conduits 7 de passage de servitudes S traverse(nt), d'une part, la veine annulaire 44 alimentant la turbine 4b, et d'autre part, le second circuit 64 de l'échangeur de chaleur 6.

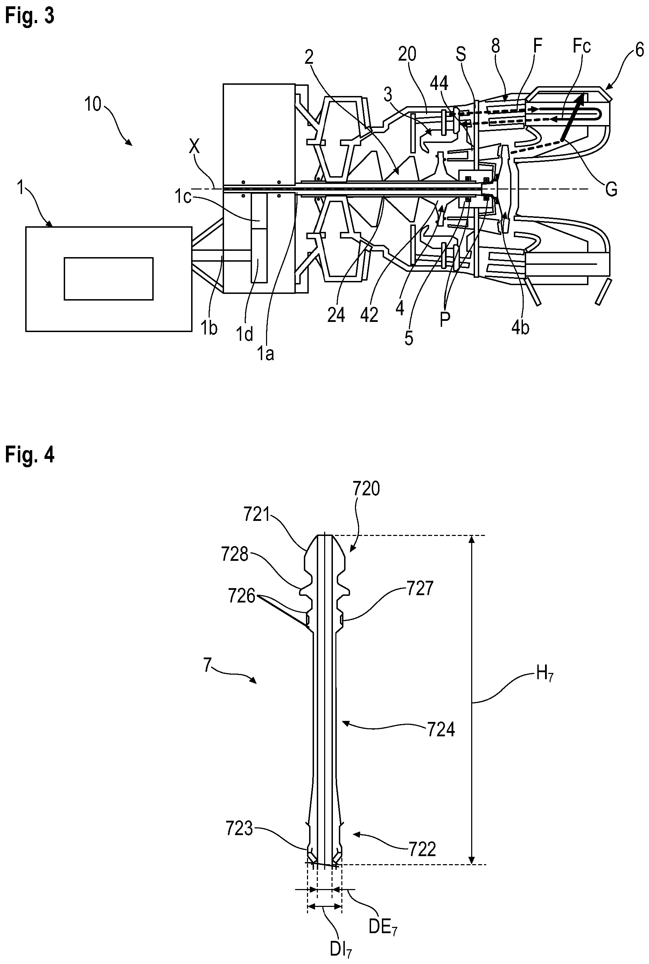

L'invention s'applique à une turbomachine 10 d'aéronef à cycle récupéré. Un exemple non limitatif d'une turbomachine 10 est illustré dans la figure 3 comme étant un turbomoteur.

La turbomachine 10 s'étend suivant un axe longitudinal X. La turbomachine 10 comprend au moins un compresseur 2 (par exemple un compresseur haute pression sur la figure 3), une chambre annulaire de combustion 3 et au moins une turbine 4, 4b (par exemple une turbine haute pression 4 et une turbine libre 4b sur la figure 3).

Le compresseur 2 et la turbine 4 peuvent présenter une forme annulaire. Le compresseur 2 et la turbine 4 sont centrés sur l'axe X de la turbomachine. La chambre de combustion 3 s'étend autour de l'axe X. Le compresseur 2 comprend un système de prélèvement 20 d'air comprimé F (par exemple par un conduit ou une cavité de prélèvement d'air comprimé F en sortie du compresseur 2).

La turbomachine 10 peut comprendre un réducteur 1 de vitesse.

Sur l'exemple de la figure 3, le compresseur 2 est relié à la turbine 4 par un arbre d'entraînement 24. La turbine libre 4b entraîne, via un arbre traversant de transmission 1a et le réducteur 1, un arbre de puissance 1b. Les arbres traversant 1a et de puissance 1b sont en prise sur le réducteur 1 via des pignons 1c, 1d.

La turbine 4 comprend un carter annulaire de turbine 40, au moins un rotor 42 et une veine annulaire 44 d'écoulement de gaz G. Le ou les rotors 42 peuvent s'étendre autour de l'arbre d'entraînement 24. Le carter annulaire 40 s'étend autour de la veine annulaire 44. La veine annulaire 44 peut s'étendre entre le carter annulaire 40 et le rotor 42.

La veine annulaire 44 comprend une entrée 442 notamment des gaz G provenant de la chambre de combustion 3, et une sortie 444 des gaz G notamment en direction d'un échangeur de chaleur 6 (décrit ci-dessous). La turbomachine 10 comprend une enceinte annulaire 5 d'un ou plusieurs palier(s) P de guidage du ou des rotors 42. Cette enceinte annulaire 5 est située radialement à l'intérieur de la veine annulaire 44.

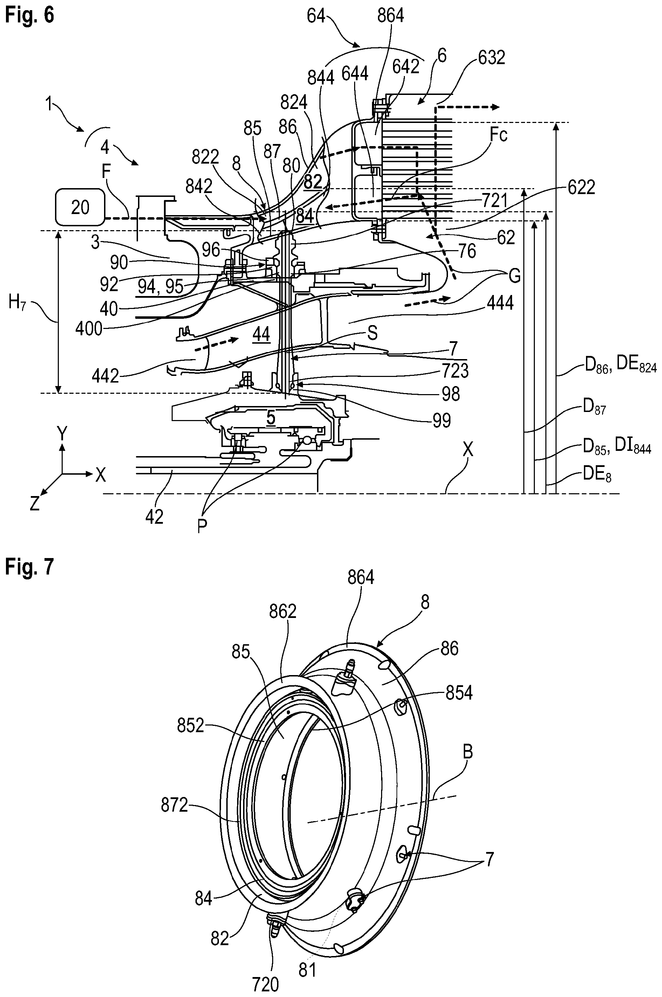

La turbomachine 10 comprend au moins un ou plusieurs conduit(s) 7 de passage de servitudes S. Le ou les conduits 7 s'étendent radialement par rapport à l'axe X depuis l'enceinte annulaire 5 de palier(s) (P) jusqu'au carter de turbine 40 (figure 6).

La figure 4 représente schématiquement un exemple de ce conduit 7. Le conduit 7 peut s'étendre entre une extrémité radialement externe 720 et une extrémité radialement interne 722 (par exemple par rapport à l'axe X). Cette extrémité radialement externe 720 peut comprendre un premier embout de raccordement 721. Ce premier embout de raccordement 721 peut être configuré pour se fixer à un tuyau d'alimentation en fluide des servitudes (S) et externe à la turbine 4 (non illustré). Pour cela le premier embout de raccordement 721 peut comprendre un filetage pour se lier au tuyau d'alimentation. L'extrémité radialement interne 722 peut comprendre un second embout de raccordement 723 qui est configuré pour se fixer sur l'enceinte annulaire 5. Pour cela le second embout de raccordement 723 peut comprendre un filetage pour se lier sur l'enceinte annulaire 5.

Le conduit 7 peut comprendre une portion médiane 724 qui relie les extrémités radialement externe 720 et interne 722.

Le premier embout de raccordement 721 peut comprendre des épaulements 726. La figure 4 illustre deux épaulements 726 au niveau du premier embout de raccordement 721. Une ou plusieurs gorges 727 peuvent être ménagées entre les épaulements 726. Le premier embout de raccordement 721 peut comprendre aussi une collerette 728 qui s'étend radialement à l'extérieur des épaulements726.

Le conduit 7 peut avoir une dimension radiale H₇. Le conduit 7 peut avoir un premier diamètre externe DE₇ et un premier diamètre interne DI₇.

La turbomachine 10 comprend un échangeur de chaleur 6. Cet échangeur 6 est situé radialement à l'extérieur de la veine annulaire 44.

L'échangeur 6 comprend deux circuits, un premier circuit 62 et un second circuit 64.

Le premier circuit 62 comprend une entrée 622 reliée à la sortie 444 de la veine annulaire 44. Le premier circuit 62 est configuré pour alimenter l'échangeur 6 en gaz G.

Le premier circuit 62 peut comprendre aussi une sortie 632 permettant à au moins une partie des gaz G de sortir de l'échangeur 6 vers l'éxtérieur de la turbomachine. Par exemple le gaz G peut sortir en passant par une tuyère d'échappement de la turbomachine, dans ce cas la sotie 632 de gaz G est reliée à la tuyère d'échapement.

Le second circuit 64 comprend une entrée d'air 642 reliée au système de prélèvement 20 d'air comprimé F dans le compresseur 2, et une sortie d'air 644. Le second circuit 64 est configuré pour, d'une part, alimenter l'échangeur 6 d'un flux d'air comprimé F provenant du système de prélèvement 20, et d'autre part, transférer un flux d'air réchauffé Fc par les gaz G dans l'échangeur 6 notamment vers l'amont de la chambre de combustion 3. Le flux d'air comprimé F est ainsi réchauffé par au moins une partie des gaz G provenant du premier circuit 62 pour former le flux d'air réchauffé Fc.

L'une des particularités de l'invention est que la turbomachine 10 comprend en outre un dispositif annulaire de circulation d'air 8.

Les figures 4 à 8 illustrent plusieurs modes de réalisation du dispositif annulaire de circulation d'air 8 au sein de la turbomachine 10.

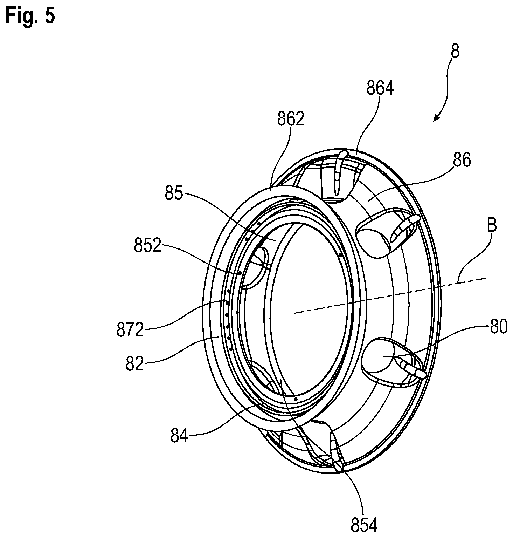

En référence aux figures 5 et 6, un premier mode de réalisation du dispositif annulaire de circulation d'air 8 va maintenant être décrit.

Le dispositif 8 peut être une pièce de révolution annulaire qui s'étend autour d'un axe longitudinal B. Cet axe B est sensiblement parallèle (ou incliné par exemple d'un angle compris entre 5 et 45° par rapport à l'axe X sur la figure 6) par rapport à l'axe X.

Le dispositif 8 comprend deux canaux annulaires coaxiaux : un premier canal 82 et un second canal 84.

Le premier canal 82 peut s'étendre entre une première extrémité axiale amont 822 et une première extrémité axiale aval 824. Le premier canal 82 est notamment en communication fluidique avec l'entrée 642 et le système de prélèvement 20 pour pouvoir alimenter l'échangeur 6 en flux d'air comprimé F.

Le second canal 84 peut s'étendre entre une seconde extrémité axiale aval 844 et une seconde extrémité axiale amont 842. Le second canal 84 est notamment en communication fluidique avec la sortie d'air 644 et l'amont de la chambre de combustion 3 pour pouvoir redistribuer le flux d'air réchauffé Fc de l'échngeur 6 vers l'amont de la chambre de combution 3.

Les premier et second canaux 82, 84 peuvent diverger vers l'aval, et comprendre chacun une section de passage qui augmentent depuis leurs extrémités axiales amont 822, 842 jusqu'à leurs extrémités axiales aval 824, 844.

Le dispositif 8 comprend trois parois annulaires coaxiales, respectivement, une paroi annulaire interne 85, une paroi annulaire externe 86 et une paroi de séparation 87. Cette paroi de séparation 87 s'étend entre la paroi interne 85 et la paroi externe 86.

Les parois externe 86 et de séparation 87 délimitent entre elles le premier canal 82. Les parois interne 85 et de séparation 87 délimitent entre elles le second canal 84.

Sur l'exemple de la figure 5, les trois parois annulaires 85, 86, 87 et les deux canaux 82, 84 sont monoblocs (c'est-à-dire constituées de la même matière).

La paroi interne 85 peut comprendre une première bride de fixation 852 notamment sur son extrémité axiale amont, et/ou une seconde bride de fixation 854, notamment sur son extrémité axiale aval. En variante (non illustrée), la paroi interne 85 peut comprendre sur son extrémité axiale amont et/ou son extrémité axiale aval, un premier organe d'étanchéité. Par exemple, ce premier organe d'étanchéité peut être un rebord fixé avec ou sans joint d'étanchéité.

La paroi externe 86 peut comprendre une troisième bride de fixation 862 notamment sur son extrémité axiale amont, et/ou une quatrième bride de fixation 864, notamment sur son extrémité axiale aval. En variante (non illustrée), la paroi externe 86 peut comprendre sur son extrémité axiale amont et/ou son extrémité axiale aval, un second organe d'étanchéité. Par exemple, ce second organe d'étanchéité peut être un rebord fixé avec ou sans joint d'étanchéité.

La paroi de séparation 87 peut comprendre un troisième organe d'étanchéité 872, notamment sur son extrémité axiale amont, et/ou un quatrième organe d'étanchéité 874, notamment sur son extrémité axiale aval. Par exemple, ces troisième et quatrième organes d'étanchéité peuvent être un rebord fixé avec ou sans joint d'étanchéité. En variante (non illustrée), la paroi de séparation 87 peut comprendre sur son extrémité axiale amont et/ou son extrémité axiale aval, une bride de fixation.

Les parois interne, externe et de séparation 85, 86, 87 peuvent avoir à leurs extrémités aval, respectivement un premier diamètre D₈₅, un second diamètre D₈₆ et un troisième diamètre D₈₇.

Tel qu'illustré sur la figure 6, le dispositif 8 peut avoir un second diamètre externe DE₈ à son extrémité amont. Ce second diamètre externe DE₈ peut être compris entre le premier diamètre D₈₅ et le troisième diamètre D₈₇. Le dispositif 8 peut avoir un troisième diamètre externe DE₈₂₄ et un second diamètre interne DI₈₄₄ à son extrémité aval. Le second diamètre externe DE₈ peut être compris entre le troisième diamètre externe DE₈₂₄ et le second diamètre interne DI₈₄₄.

Sur l'exemple de la figure 6, le premier diamètre D₈₅ est sensiblement identique au diamètre interne DI₈₄₄ et le second diamètre D₈₆ est sensiblement identique au diamètre externe DE₈₂₄.

Le dispositif 8 peut comprendre une ou plusieurs lumières 80 (ou orifices 81) qui s'étendent radialement sur toute l'épaisseur du dispositif 8. L'épaisseur du dispositif 8 est mesurée suivant un plan perpendiculaire à l'axe B (ou l'axe X).

On va maintenant décrire le dispositif annulaire de circulation d'air 8 du premier mode de réalisation assemblé dans la turbomachine 10, en référence à la figure 6.

Dans la turbomachine 10, le dispositif 8 s'étend autour de la veine annulaire 44, notamment autour du carter annulaire 40 de turbine.

La première extrémité axiale amont 822 du premier canal 82 du dispositif 8 est reliée au système de prélèvement 20, et la première extrémité axiale aval 824 est reliée à l'entrée d'air 642 du second circuit 64 de l'échangeur 6. La seconde extrémité axiale aval 844 du second canal 84 du dispositif 8 est reliée à la sortie d'air 644 du second circuit 64 de l'échangeur 6. La seconde extrémité axiale amont 842 peut déboucher en aval de la chambre de combustion 3.

Une autre des particularités de l'invention est que le ou les conduits 7 s'étendent radialement vers l'extérieur (par rapport à l'axe X) jusqu'au dispositif annulaire de circulation d'air 8.

Sur l'exemple de l'assemblage de la figure 6, le conduit 7 s'étend de l'enceinte annulaire 5 jusqu'au dispositif 8. En particulier, le premier embout de raccordement 721 du conduit 7 s'étend dans la lumière 80 du dispositif 8 (au niveau de la paroi interne 85), et le second embout de raccordement 723 s'étend dans l'enceinte annulaire 5. La portion médiane 724 du conduit 7 traverse la veine annulaire 44.

Le carter annulaire 40 peut comprendre au moins un orifice de passage 400 du conduit 7. Cet orifice de passage 400 peut être sensiblement aligné avec la lumière 80 suivant un plan perpendiculaire à l'axe X.

Selon l'assemblage de la figure 6, le conduit 7 est relié sur l'enceinte annulaire 5, par exemple par une liaison vissée 98 avec un pas de vis formée sur l'extrémité radialement interne 722.

Le conduit 7, notamment l'extrémité radialement externe 720, peut être en contact avec le carter annulaire 40 par l'intermédiaire d'une liaison linéaire annulaire 90 par exemple. En particulier, l'extrémité radialement externe 720 comprend deux portées (telles qu'au niveau des épaulements 726 et de la collerette 728) pour réaliser cette liaison linéaie annulaire.

On entend par une « liaison linéaire annulaire » une liaison entre une pièce sphérique (à savoir les deux portées au niveau des épaulements 726 et de la collerette 728 de l'extrémité radialement externe 720) et une pièce cilyndrique (à savoir le carter annulaire 40 au niveau de l'orifice de passage 400).

Ainsi, la liaison linéaire annulaire peut permettre à l'extrémité radialement externe 720 du conduit 7 de translater par rapport à l'orifice de passage 400 suivant un axe Y, et/ou de fléchier suivant l'axe X et un axe circonférentiel Z tout en restant guidé dans l'orifice de passage 400. L'axe Y peut être sensiblement perpendiculaire à l'axe X. L'axe Z peut être sensiblement transversal à l'axe X.

Au second embout de raccordement 723, un joint conique 99 peut être agencé pour réaliser l'étancheité avec l'enceinte annulaire 5. Au niveau des épaulements 726, deux joints segments 94, 95 peuvent être agencés pour réaliser l'étancheité avec le carter annulaire 40. Ces joints 94, 95 peuvent être situés dans les gorges 727. Au niveau de la colerette 728, le conduit 7 peut être arrêté en rotation avec une bride cannelée 96 permettant le coulissement du conduit 7 sur la collerette 728 (également cannelée). Une douille 92 (pouvant être une pièce d'usure) peut être assemblée sur une portée au niveau des joints 94,95 .

La liaison vissée 98 et la laison linéaire annulaire 90 permettent la libre dilatation du ou des conduits 7 dans la turbomachine.

Le premier embout de reaccordement 721 peut comprendre un filetage pour fixer le conduit 7 sur le tuyau d'alimentation extrerne permettant la continuité du conduit 7 de passage de servitudes S. Sur l'exemple de la figure 6, le tuyau d'alimentation externe est configuré à traverser la lumière 80 pour se fixer sur le premier embout de raccordement 721 situé au niveau de la lumière 80 du dispositif 8.

Au niveau du premier embout de reaccordement 721, un joint peut être agencé pour permettre l'étanchéité de tout le conduit 7 de passage de servitudes.

Le conduit 7 de passage de servitudes S présente la dimension radiale H₇ comprise entre 110 et 170 mm. En particulier, la dimension radiale H₇ sur la figure 6 est comprise entre 110 et 120 mm.

Le premier diamètre externe DE₇ du conduit 7 peut être compris entre 6 et 10 mm. De préférence, le premier diamètre externe DE₇ est compris entre 8 et 9 mm. Le premier diamètre interne DI₇ du conduit 7 peut être compris entre 4 et 8 mm. De préférence, le premier diamètre interne DI₇ est de 6 mm.

Dans l'assemblage du ou des conduits 7 et du dispositif 8 du premier mode de réalisation (figure 6), de l'air comprimé F (par le compresseur 2) est prélevé par le système de prélèvement 20 pour être acheminé jusqu'à l'échangeur 6 par l'intermédiaire du premier canal 82 du dispositif 8.

Les gaz G de combustion (en sortie de la chambre de combustion 3 et de la turbine 4) s'écoulent dans la veine annulaire 44 pour être acheminés jusqu'à l'échangeur 6 par le premier circuit 62. Au moins une partie des gaz G est utilisée pour réchauffer l'air comprimé F dans l'échangeur 6. L'air réchauffé Fc par les gaz G est ensuite acheminé par le second canal 84 du dispositif 8, notamment vers l'amont de la chambre de combustion 3. Une autre partie des gaz G peut être évacuée de la turbomachine.

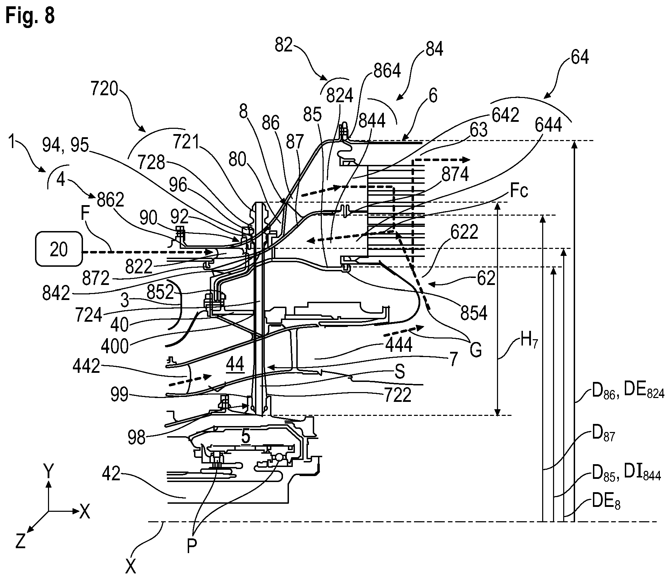

Les figures 7 et 8 illustrent un second mode de réalisation du dispositif annulaire de circulation d'air 8 assemblé dans la turbomachine 10 selon l'invention.

Le dispositif 8 du second mode de réalisation diffère du dispositif 8 du premier mode de réalisation par le premier embout de raccordement 721 du conduit 7 qui se fixe sur le dispositif 8 (au lieu de se fixer sur le carter annulaire 40 de la figure 6).

Pour cela, la liaison linéaire annulaire 90 (pouvant comprendre la bride cannelée 96, les joints segments 94, 95) peut être située dans le dispositif 8.

En particulier, la liaison linéaire annulaire 90 est située au niveau de la paroi externe 86 et/ou du premier canal 82 du dispositif 8.

Sur l'exemple de la figure 8, au moins une partie de l'extrémité radicalement externe 720 traverse l'orifice 81, et la liaison linéaire annulaire 90 est située au niveau de la paroi externe 86 et du premier canal 81. Le premier embout de raccordement 721 s'étend au moins en partie vers l'extérieur de la paroi externe 86. Ceci permet de faciliter le raccordement au tuyau d'alimentation externe, et de ne pas perturber les échanges d'air F, Fc du second circuit 64 de l'échangeur 6.

De plus, le conduit 7 du second mode de réalisation diffère de celui du premier mode de réalisation par la dimension radiale H₇. La dimension radiale H₇ du conduit 7 du second mode de réalisation, peut être comprise entre 140 et 160 mm. Par ailleurs, la portion médiane 724 du conduit 7 travserse au moins en partie la veine annulaire 44 et le carter annulaire 40, et l'extrémité radialement externe 720 traverse au moins en partie les premier et second canaux 82, 84 sur l'exemple de la figure 7.

Agrandir la dimension radiale H₇ du conduit dans le second mode de réalisation permet de placer le premier embout de raccordement 721 radialement le plus à l'extérieur du dispositif 8. Ceci permet, d'une part, de faciliter l'assemblage de ce premier embout de raccordement 721 avec le tuyau d'alimentation externe à la turbine 4, et d'autre part, de réduire encore plus le blocage que peut produire le passage du ou des conduit(s) 7 à travers les premier et second canaux 82, 84 et la veine annulaire 44. De cette façon, l'échange d'air F, Fc entre le dispositif 8 et le second circuit 64 de l'échangeur est plus efficace.

## Revendications

1. Turbomachine (10) d'aéronef à cycle récupéré, comportant :
- au moins un compresseur (2) centré sur un axe (X) de la turbomachine,
- une chambre annulaire de combustion (3) s'étendant autour de l'axe (X),
- au moins une turbine (4) centrée sur l'axe (X), cette turbine définissant une veine annulaire d'écoulement de gaz (44),
- une enceinte annulaire (5) de palier(s) (P) de guidage d'au moins un rotor (42) de la turbine, cette enceinte annulaire (5) étant située radialement à l'intérieur de la veine annulaire (44),
- un échangeur de chaleur (6) situé radialement à l'extérieur de la veine annulaire (44) et comportant deux circuits, un premier circuit (62) de l'échangeur comportant une entrée (622) reliée à une sortie (444) de la veine annulaire (44), et un second circuit (64) de l'échangeur comportant une entrée d'air (642) reliée à un système de prélèvement d'air comprimé (20) dans le compresseur (2), et une sortie d'air (644),
- un carter annulaire de turbine (40) s'étendant autour de la veine annulaire (44), et
- au moins un conduit (7) de passage de servitudes (S) qui s'étend radialement par rapport à l'axe (X) depuis le carter de turbine (40) jusqu'à l'enceinte annulaire (5) de palier(s),
**caractérisée en ce que** la turbomachine (10) comprend en outre un dispositif annulaire de circulation d'air (8) s'étendant autour de la veine annulaire (44) de turbine et comportant deux canaux annulaires coaxiaux, un premier canal (82) du dispositif comportant une première extrémité axiale amont (822) reliée au système de prélèvement (20) et une première extrémité axiale aval (824) reliée à l'entrée d'air (642) du second circuit (64) de l'échangeur, et un second canal (84) du dispositif comportant une seconde extrémité axiale aval (844) reliée à la sortie d'air (644) du second circuit (64) de l'échangeur,
et **en ce que** ledit au moins un conduit (7) s'étend radialement vers l'extérieur jusqu'à ce dispositif annulaire de circulation d'air (8),
et **en ce que** ledit au moins un conduit (7) comprend une extrémité radialement externe (720) qui comprend un embout de raccordement (721), et qui est relié au dispositif annulaire de circulation d'air (8).

2. Turbomachine selon la revendication 1, **caractérisée en ce que** ladite extrémité radialement externe (720) est reliée au dispositif annulaire de circulation d'air (8) par une liaison linéaire annulaire (90).

3. Turbomachine selon la revendication 2, **caractérisé en ce qu'**au moins un joint d'étanchéité (94, 95) est logé dans une gorge (727) de l'extrémité radialement externe (720).

4. Turbomachine selon au moins l'une des revendications 1 à 3, **caractérisée en ce que** ledit au moins un conduit (7) traverse une lumière (80) ou un orifice (81) radial(e) du dispositif annulaire de circulation d'air (8), cette lumière (80) ou cet orifice (81) s'étendant radialement sur toute l'épaisseur dudit dispositif (8).

5. Turbomachine selon au moins l'une des revendications précédentes, **caractérisée en ce que** les premier et second canaux (82, 84) du dispositif annulaire de circulation d'air (8) divergent vers l'aval et comprennent chacun une section de passage qui augmentent depuis leurs extrémités axiales amont (822, 842) jusqu'à leurs extrémités axiales aval (824, 844).

6. Turbomachine selon au moins l'une des revendications précédentes, **caractérisée en ce que** le dispositif annulaire de circulation d'air (8) comprend trois parois annulaires (85, 86, 87) coaxiales délimitant entre elles lesdits premier et second canaux (82, 84), chacune de ces parois (85, 86, 87) comprenant une bride de fixation (852, 854, 862, 864) ou un organe d'étanchéité (872, 874) à chacune de ses extrémités axiales (822, 824, 842, 844).

7. Turbomachine selon la revendication 6, **caractérisée en ce que** le dispositif annulaire de circulation d'air (8) a un diamètre externe (DE₈) à son extrémité amont qui est compris entre des diamètres interne (DI₈₄₄) et externe (DE₈₂₄) de son extrémité aval, et qui est par exemple compris entre des diamètres (D₈₇, D₈₅) des extrémités aval de ses parois de séparation (87) et interne (85).

8. Turbomachine selon au moins l'une des revendications précédentes, **caractérisée en ce que** le carter annulaire (40) de turbine comprend au moins un orifice de passage (400) dudit au moins un conduit (7).

9. Turbomachine selon au moins l'une des revendications précédentes, **caractérisée en ce que** ledit au moins un conduit (7) de passage de servitudes (S) présente une dimension radiale (H₇) comprise entre 110 et 170 mm, de préférence la dimension radiale (H₇) est comprise entre 150 et 160 mm.

10. Turbomachine selon au moins l'une des revendications précédentes, **caractérisée en ce que** ledit au moins un conduit (7) de passage de servitudes (S) présente un diamètre externe (DE₇) compris entre 6 et 10 mm et un diamètre interne (DI₇) compris entre 4 et 8 mm.

## Patentansprüche

1. Turbotriebwerk (10) eines Luftfahrzeugs mit Rückgewinnungszyklus, umfassend:
- mindestens einen Kompressor (2), der auf einer Achse (X) des Turbotriebwerks zentriert ist,
- eine ringförmige Brennkammer (3), die sich um die Achse (X) erstreckt,
- mindestens eine auf der Achse (X) zentriertes Turbine (4), wobei diese Turbine einen ringförmigen Gasströmungskanal (44) definiert,
- eine ringförmige Kammer (5) für ein oder mehrere Führungslager (P) mindestens eines Rotors (42) der Turbine, wobei sich diese ringförmige Kammer (5) radial innerhalb des ringförmigen Durchgangs (44) befindet,
- einen Wärmetauscher (6), der sich radial außerhalb des ringförmigen Durchgangs (44) befindet und zwei Kreisläufe aufweist, wobei ein erster Kreislauf (62) des Tauschers einen Einlass (622) aufweist, der mit einem Auslass (444) des ringförmigen Durchgangs (44) verbunden ist, und wobei ein zweiter Kreislauf (64) des Tauschers einen Lufteinlass (642) aufweist, der mit einem Druckluftentnahmesystem (20) im Kompressor (2) verbunden ist, und einen Luftauslass (644),
- ein ringförmiges Turbinengehäuse (40), das sich um den ringförmigen Durchgang (44) herum erstreckt, und
- mindestens eine Leitung (7) zur Durchleitung von Hilfsgerätschaften (S), die sich radial in Bezug auf die Achse (X) vom Turbinengehäuse (40) bis zu dem/den ringförmigen Lagergehäuse(n) (5) erstreckt,
**dadurch gekennzeichnet, dass** das Turbotriebwerk (10) weiter eine ringförmige Luftzirkulationsvorrichtung (8) umfasst, die sich um den ringförmigen Turbinendurchgang (44) erstreckt und zwei koaxiale ringförmige Kanäle aufweist, wobei ein erster Kanal (82) der Vorrichtung ein erstes axiales stromaufwärts gelegenes Ende (822), das mit dem Entnahmesystem (20) verbunden ist, und ein erstes axiales stromabwärts gelegenes Ende (824) aufweist, das mit dem Lufteinlass (642) des zweiten Kreislaufs (64) des Tauschers verbunden ist, und einen zweiten Kanal (84) der Vorrichtung, der ein zweites axiales stromabwärts gelegenes Ende (844) aufweist, das mit dem Luftauslass (644) des zweiten Kreislaufs (64) des Tauschers verbunden ist,
und dass sich die mindestens eine Leitung (7) radial nach außen bis zu dieser ringförmigen Luftzirkulationsvorrichtung (8) erstreckt, und dass die mindestens eine Leitung (7) ein radial äußeres Ende (720) umfasst, das ein Anschlussstück (721) umfasst und das mit der ringförmigen Luftzirkulationsvorrichtung (8) verbunden ist.

2. Turbotriebwerk nach Anspruch 1, **dadurch gekennzeichnet, dass** das radial äußere Ende (720) über eine ringförmige lineare Verbindung (90) mit der ringförmigen Luftzirkulationsvorrichtung (8) verbunden ist.

3. Turbotriebwerk nach Anspruch 2, **dadurch gekennzeichnet, dass** mindestens eine Dichtung (94, 95) in einer Nut (727) des radial äußeren Endes (720) untergebracht ist.

4. Turbotriebwerk nach mindestens einem der Ansprüche 1 bis 3, **dadurch gekennzeichnet, dass** die mindestens eine Leitung (7) eine radiale Aussparung (80) oder Öffnung (81) der ringförmigen Luftzirkulationsvorrichtung (8) durchquert, wobei sich diese Aussparung (80) oder diese Öffnung (81) radial über die gesamte Dicke der Vorrichtung (8) erstreckt.

5. Turbotriebwerk nach mindestens einem der vorstehenden Ansprüche, **dadurch gekennzeichnet, dass** der erste und der zweite Kanal (82, 84) der ringförmigen Luftzirkulationsvorrichtung (8) stromabwärts divergieren und jeweils einen Durchgangsquerschnitt umfassen, der von ihren axialen stromaufwärts gelegenen Enden (822, 842) bis zu ihren axialen stromabwärts gelegenen Enden (824, 844) zunimmt.

6. Turbotriebwerk nach mindestens einem der vorstehenden Ansprüche, **dadurch gekennzeichnet, dass** die ringförmige Luftzirkulationsvorrichtung (8) drei koaxiale ringförmige Wände (85, 86, 87) umfasst, die zwischen sich den ersten und den zweiten Kanal (82, 84) begrenzen, wobei jede dieser Wände (85, 86, 87) an jedem ihrer axialen Enden (822, 824, 842, 844) einen Befestigungsflansch (852, 854, 862, 864) oder ein Dichtungselement (872, 874) umfasst.

7. Turbotriebwerk nach Anspruch 6, **dadurch gekennzeichnet, dass** die ringförmige Luftzirkulationsvorrichtung (8) an ihrem stromaufwärts gelegenen Ende einen Außendurchmesser (DE₈) aufweist, der zwischen dem Innendurchmesser (DI₈₄₄) und dem Außendurchmesser (DE₈₂₄) ihres stromabwärts gelegenen Endes liegt und der zum Beispiel zwischen Durchmessern (D₈₇, D₈₅) der stromabwärts gelegenen Enden ihrer Trennwand (87) und ihrer Innenwand (85) liegt.

8. Turbotriebwerk nach mindestens einem der vorstehenden Ansprüche, **dadurch gekennzeichnet, dass** das ringförmige Turbinengehäuse (40) mindestens eine Durchgangsöffnung (400) der mindestens einen Leitung (7) umfasst.

9. Turbotriebwerk nach mindestens einem der vorstehenden Ansprüche, **dadurch gekennzeichnet, dass** die mindestens eine Leitung (7) zur Durchleitung von Hilfsgerätschaften (S) eine radiale Abmessung (H₇) zwischen 110 und 170 mm aufweist, wobei die radiale Abmessung (H₇) vorzugsweise zwischen 150 und 160 mm liegt.

10. Turbotriebwerk nach mindestens einem der vorstehenden Ansprüche, **dadurch gekennzeichnet, dass** die mindestens eine Leitung (7) zur Durchleitung von Hilfsgerätschaften (S) einen Außendurchmesser (DE₇) zwischen 6 und 10 mm und einen Innendurchmesser (Dl₇) zwischen 4 und 8 mm aufweist.

## Claims

1. An aircraft turbomachine (10) with a recovered-cycle, comprising:
- at least one compressor (2) centered on an axis (X) of the turbomachine,
- an annular combustion chamber (3) extending around the axis (X),
- at least one turbine (4) centered on the axis (X), this turbine defining an annular vein (44) for gas flow,
- an annular enclosure (5) of bearing(s) (P) for guiding at least one rotor (42) of the turbine, this annular enclosure (5) being located radially inside the annular vein (44),
- a heat exchanger (6) located radially outside the annular vein (44) and comprising two circuits, a first circuit (62) of the exchanger comprising an inlet (622) connected to an outlet (444) of the annular vein (44), and a second circuit (64) of the exchanger comprising an air inlet (642) connected to a collecting system (20) of compressed air from the compressor (2), and an air outlet (644),
- an annular turbine casing (40) extending around the annular vein (44), and
- at least one duct (7) of auxiliaries (S) passage which extends radially with respect to the axis (X) from the turbine casing (40) to the annular enclosure (5) of bearing(s),
**characterised in that** the turbomachine (10) further comprises an annular air circulation device (8) extending around the annular vein (44) of the turbine and comprising two coaxial annular channels, a first channel (82) of the device comprising a first upstream axial end (822) connected to the collecting system (20) and a first downstream axial end (824) connected to the air inlet (642) of the second circuit (64) of the exchanger, and a second channel (84) of the device comprising a second downstream axial end (844) connected to the air outlet (644) of the second circuit (64) of the exchanger,
and **in that** said at least one duct (7) extends radially outwards to said annular air circulation device (8),
and **in that** said at least one duct (7) comprises a radially outer end (720) which comprises a connecting end-piece (721), and which is connected to the annular air circulation device (8).

2. The turbomachine according to claim 1, **characterised in that** said radially outer end (720) is connected to the annular air circulation device (8) by an annular linear link (90).

3. The turbomachine according to claim 2, **characterised in that** at least one seal (94, 95) is housed in a groove (727) of the radially outer end (720).

4. The turbomachine according to at least one of claims 1 to 3, **characterised in that** said at least one duct (7) passes through a radial opening (80) or orifice (81) of the annular air circulation device (8), this opening (80) or this orifice (81) extending radially over the entire thickness of said device (8).

5. The turbomachine according to at least one of the preceding claims, **characterised in that** the first and second channels (82, 84) of the annular air circulation device (8) diverge downstream and each comprise a passage cross-section which increases from their upstream axial ends (822, 842) to their downstream axial ends (824, 844).

6. The turbomachine according to at least one of the preceding claims, **characterised in that** the annular air circulation device (8) comprises three coaxial annular walls (85, 86, 87) defining between them said first and second channels (82, 84), each of these walls (85, 86, 87) comprising a fastening flange (852, 854, 862, 864) or a sealing member (872, 874) at each of its axial ends (822, 824, 842, 844).

7. The turbomachine according to claim 6, **characterised in that** the annular air circulation device (8) has an external diameter (DE₈) at its upstream end which lies between inner (DI₈₄₄) and outer (DE₈₂₄) diameters of its downstream end, and which lies for example between diameters (D₈₇, D₈₅) of the downstream ends of its partition (87) and internal (85) walls.

8. The turbomachine according to at least one of the preceding claims, **characterised in that** the annular turbine casing (40) comprises at least one passage orifice (400) of said at least one duct (7).

9. The turbomachine according to at least one of the preceding claims, **characterised in that** said at least one duct (7) of auxiliaries (S) passage has a radial dimension (H₇) of between 110 and 170 mm, preferably the radial dimension (H₇) is between 150 and 160 mm.

10. The turbomachine according to at least one of the preceding claims, **characterised in that** said at least one duct (7) of auxiliaries (S) passage has an external diameter (DE₇) of between 6 and 10 mm and an internal diameter (DI₇) of between 4 and 8 mm.
